# EUROPÄISCHE PATENTSCHRIFT

(11) **EP 2 237 590 B1**
(45) Veröffentlichungstag und Bekanntmachung des Hinweises auf die Patenterteilung: **29.04.2020**
(21) Anmeldenummer: 10003561.7
(22) Anmeldetag: 31.03.2010
(51) Int. Cl.: H04W 24/06, H04W 4/14, H04W 24/10

(54) **Verfahren und Vorrichtung zum Testen von in Kommunikationsnetzen betreibbaren Endgeräten und/oder auf diesen Endgeräten laufenden Programmen**
Method and apparatus for testing of terminals which are operated in communication networks and/or programs running on these terminals
Procédé et dispositif pour tester des terminaux fonctionnant dans des réseaux de communication et/ou programmes exécutés sur ces terminaux

(30) Priorität: 01.04.2009 DE 102009015248
(43) Veröffentlichungstag der Anmeldung: 06.10.2010
(73) Patentinhaber: Vodafone Holding GmbH, 40213 Düsseldorf (DE)
(72) Erfinder: Ackermann, Thomas, 50674 Köln (DE); Lien, Tam, 40599 Düsseldorf (DE)
(74) Vertreter: Ring & Weisbrodt

(56) Entgegenhaltungen:
- GB-A- 2 416 956
- US-A1- 2002 072 359
- US-A1- 2003 159 088
- US-A1- 2006 100 841
- US-A1- 2007 287 445
- US-B1- 6 567 381
- RAHNEMA M: "Overview of the GSM system and protocol architecture", IEEE COMMUNICATIONS MAGAZINE, IEEE SERVICE CENTER, PISCATAWAY, US, vol. 31, no. 4, 1 April 1993 (1993-04-01), pages 92-100, XP011416983, ISSN: 0163-6804, DOI: 10.1109/35.210402

## Beschreibung

Die vorliegende Erfindung betrifft Verfahren zum zumindest teilweise automatisierten Testen von in Kommunikationsnetzen, insbesondere Telekommunikationsnetzen, vorzugsweise Mobilfunknetzen gemäß einem GSM-, GPRS-, UMTS und/oder LTE-Funknetzstandard (GSM: Global System for Mobile Communications, GPRS: General Packet Radio Service, UMTS: Universal Mobile Telecommunications System, LTE: Long Term Evolution), betreibbaren Endgeräten und/oder von auf diesen Endgeräten laufenden Programmen, insbesondere Anwendungs- und/oder Systemprogrammen, unter Nutzung eines auf dem Endgerät ausführbaren Testprogramms und einer in dem Kommunikationsnetz bereitgestellten Recheneinrichtung.

Ferner betrifft die vorliegende Erfindung eine Recheneinrichtung zum Betrieb in einem

Mobilfunknetz gemäß einem GSM-, GPRS-, UMTS und/oder LTE-Funknetzstandard.

Für die Qualitätssicherung ist es im Rahmen der Produktfreigabe von besonderer Bedeutung, dass neuentwickelte beziehungsweise weiterentwickelte Produkte fehlerfrei funktionieren. Um über die Fehlerfreiheit verlässliche Aussagen treffen zu können, sind häufig umfangreiche Tests notwendig. Insbesondere bei in Kommunikationsnetzen betreibbaren Endgeräten sowie auf derartigen Endgeräten laufenden Anwendungs- und/oder Systemprogrammen ist der Testaufwand bislang sehr groß. Grund hierfür ist unter anderem, dass die Tests im Wesentlichen manuell durchgeführt werden müssen. Der damit verbundene Zeitaufwand verzögert die Produktfreigabe, was sich im Wettbewerb nachteilig auswirkt. Des Weiteren besteht für die Durchführung der Test ein hoher Personalbedarf, wodurch derartige Tests kostenintensiv sind.

Da die Tests üblicherweise beim Hersteller der Endgeräte durchgeführt werden, ist zudem die Kontrolle des Zwischenabnehmers insbesondere hinsichtlich einzuhaltender Vorgaben seitens des Herstellers durch die Tests beim Hersteller unzureichend integriert.

Ein weiterer Nachteil besteht darin, dass bei herkömmlichen Tests das zu testende Endgerät üblicherweise vor Ort bereitgehalten werden muss, insbesondere um zu gewährleisten, dass festgelegte Testparameter eingehalten werden. Ferndiagnosen, die häufig dann erforderlich sind, wenn Probleme mit Softwareaktualisierungen auf Endgeräten, wie beispielsweise Firmwareupdates, auftreten, sind daher im Allgemeinen nur in unbefriedigender Art und Weise zu realisieren. Bislang sind zur Ferndiagnose Callcenter eingerichtet, wobei nach Anruf einer Service-Hotline im Dialog zwischen Service-Mitarbeiter und Anrufer das auftretende Problem erkannt und eine Lösung für das Problem gefunden werden soll. Nachteilig ist hierbei insbesondere, dass der zu führende Dialog, der zur Problemerkennung beitragen soll, einen relativ hohen Kenntnisstand des Anrufenden voraussetzt, damit der Dialog konstruktiv geführt werden kann. Des Weiteren werden bei diesem Vorgehen nur Probleme diskutiert, die dem Anrufer aufgefallen sind. Probleme, die beim Ausführen von Funktionen auftreten, die der Anrufer selber nicht oder nur selten nutzt, werden oftmals erst viel später erkannt. Die GB 2 416 956 A offenbart ein Verfahren zum Testen der Betriebsintegrität mindestens eines Teils einer Mobilfunkkommunikationsvorrichtung und umfasst die Schritte: des Übertragens einer Testsequenz, die im Allgemeinen eine Hash-Funktion umfasst, an die Vorrichtung; des Bestimmens und dann des Übertragens des korrekten Ergebnisses des Tests, der durch die Testsequenz verkörpert wird, an die Vorrichtung; des Anwendens der Testsequenz auf einen ausgewählten Teil der Vorrichtung und des Durchführens eines Vergleichs des Ergebnisses der Anwendung der Testsequenz mit dem übertragenen korrekten Ergebnis, um eine mögliche Kompromittierung in der Integrität der mindestens einen Komponente der Vorrichtung zu identifizieren, wenn der Vergleich anzeigt, dass die beiden Ergebnisse unterschiedlich sind.

Die US 6,567,381 B1 offenbart ein Verfahren zum automatischen Messen von Parameterdaten in Bezug auf die drahtlose Netzwerkumgebung in einem CDMA-System. Dabei wird, wenn zunächst die Telefonnummer eines Servers aus den in einer Speichervorrichtung gespeicherten Einschaltregistrierungsdaten ermittelt wird, eine Verbindung mit dem Server über eine Mobilstation mit Datenservicefunktion unter Verwendung der Telefonnummer des Servers versucht. Liegen danach nach der Verbindung Testplanprogrammdaten vom Server vor, werden die Parameterdaten mit einer anderen Mobilstation mit einer Diagnosemonitorfunktion basierend auf den Testplanprogrammdaten gemessen. Die gemessenen Parameterdaten werden dann gesammelt und analysiert, um Sätze von gemessenen Parameterdaten zu erhalten, wobei jeder Satz eine andere Art von Messdaten aufweist; und schließlich werden die Sätze von gemessenen Parameterdaten über die Mobilstation mit der Datenservicefunktion an den Server übertragen, wenn eine Datenübertragungsanforderung vom Server vorliegt.

Die US 2006/0100841 A1 offenbart ein automatisches Testsystem und -verfahren zum Testen eines Mobiltelefons, welches einen Basisstationssimulator und einen Testrechner verwendet. Der Testrechner wandelt dabei eine Betriebsmeldung vom Basisstationssimulator in einen Testbefehl um. Der Testbefehl wird dann an das zu testende Mobiltelefon gesendet. Anschließend validiert der Basisstationssimulator eine Leistung des Mobiltelefons, indem ein Ausführungsergebnis des Mobiltelefons untersucht wird.

Die US 2003/0159088 A1 offenbart ein Verfahren zum Verfolgen von Benutzermustern, zum Erhalten von Debug-Informationen von verwendeten Einzelhandelsgeräten und zum automatischen Sammeln von Daten an einem zentralen Ort, wo diese automatisch verarbeitet werden. Dabei sind Informationen über den Zustand des Systems zum Zeitpunkt des Auftretens eines Fehlers auf einer mobilen Vorrichtung für einen Entwickler in einem getrennten Modus zugänglich und Nutzungsmuster aus den erhobenen Daten ersichtlich.

Die US 2002/0072359 A1 offenbart ein Mobilstation-Diagnosetestsystem zur Verwendung in einem drahtlosen Netzwerk mit einer Vielzahl von Basisstationen, wobei jede der Basisstationen in der Lage ist, mit einer Vielzahl von Mobilstationen zu kommunizieren. Das Diagnosetestsystem der Mobilstation testet den Betrieb einer ersten Mobilstation und umfasst: eine Datenbank zum Speichern einer Mobilstationsdiagnosetestdatei, die ein Mobilstationsdiagnosetestprogramm im interpretierten Bytecode-Format umfasst; und eine mit der Datenbank gekoppelte Diagnosesteuerung zum Empfangen einer Benachrichtigung, die anzeigt, dass ein Fehler in der ersten Mobilstation aufgetreten ist. Als Reaktion auf den Erhalt der Benachrichtigung ruft das Mobildiagnosetestsystem die Mobilstations-Diagnosetestdatei aus der Datenbank ab und sendet sie an die erste Mobilstation. Der Empfang der Mobilstationsdiagnosetestdatei veranlasst die Mobilstation, das Mobilstationsdiagnosetestprogramm auszuführen.

In Anbetracht dieses Standes der Technik liegt der vorliegenden Erfindung die Aufgabe zugrunde, ein Verfahren zum Testen von in Kommunikationsnetzen betreibbaren Endgeräten und/oder auf diesen Endgeräten laufenden Programmen bereitzustellen, durch dessen Einsatz entsprechende Produkttests insbesondere im Rahmen von Produktfreigaben zumindest teilweise automatisiert sowie dezentralisiert und dadurch wirtschaftlicher durchführbar sind.

Die Erfindung wird durch die beigefügten Ansprüche definiert. Zur technischen Lösung wird mit der vorliegenden Erfindung ein Verfahren zum zumindest teilweise automatisierten Testen von in Mobilfunknetzen gemäß einem GSM-, GPRS-, UMTS- und/oder LTE-Funknetzstandard betreibbaren Endgeräten und/oder von auf diesen Endgeräten laufenden Programmen unter Nutzung eines auf dem Endgerät ausführbaren Testprogramms und einer im Mobilfunknetz bereitgestellten Recheneinrichtung, wobei zur Bestimmung des zu testenden Endgerätes eine das zu testende Endgerät identifizierende Kennung an die im Mobilfunknetz bereitgestellte Recheneinrichtung übertragen wird, wenigstens eine Information hinsichtlich des wenigstens einen durchzuführenden Tests an die im Mobilfunknetz bereitgestellte Recheneinrichtung übertragen wird, seitens der im Mobilfunknetz bereitgestellten Recheneinrichtung auf Basis der wenigstens einen übertragenen Information hinsichtlich des wenigstens einen durchzuführenden Tests wenigstens ein Testprogramm generiert wird, wobei es sich bei der Information um eine standardisiert aufgebaute und als Handbuch für das zu testende Endgerät dienende Dokumentation handelt, so dass aus dem Aufbau der Dokumentation heraus automatisiert eine Testspezifikation erstellbar ist, durch welche in formalisierter Weise wenigstens ein zu testendes Merkmal definierbar ist, das generierte Testprogramm an das zu testende Endgerät übertragen wird, das seitens des zu testenden Endgeräts empfangene Testprogramm zur Ausführung gebracht wird, und im Rahmen der Ausführung des Testprogramms zumindest teilautomatisch Testdaten bezüglich des durchzuführenden Tests erfasst werden, wobei die erfassten Testdaten wenigstens auf dem zu testenden Endgerät getätigte Eingaben und/oder seitens des zu testenden Endgerätes erzeugte Ausgaben und/oder eine das zu testende Endgerät identifizierende Kennung und/oder ein Datum bezüglich des zu testenden Endgerätes und/oder im Rahmen des Tests manuell hinzugefügte Einträge umfassen.

Der Erfindung liegt die Erkenntnis zugrunde, dass durch automatisches Generieren eines auf hinsichtlich eines durchzuführenden Tests übertragenen Informationen basierenden Testprogramms seitens einer im Kommunikationsnetz betreibbaren Recheneinrichtung und anschließendem Übertragen des Testprogramms zur Testdurchführung an zu testende Endgeräte, wie Personalcomputer, Laptops, PDAs (PDA: Personal Digital Assistant), Mobilfunktelefone und dergleichen Endgeräte, Geräte- und Programmtests schneller und kostengünstiger als herkömmliche Tests durchführbar sind.

Bei der im Kommunikationsnetz bereitgestellten Recheneinrichtung kann es sich beispielsweise um einen für die Durchführung entsprechender Tests eingerichteten Testserver handeln. Dieser Testserver beziehungsweise die im Kommunikationsnetz bereitgestellte Recheneinrichtung ist üblicherweise mit weiteren Einrichtungen des Kommunikationsnetzes verbunden, die beispielsweise im Rahmen der Übertragung von Daten für entsprechende Sende- und/oder Empfangsvorgänge eingerichtet sind. Ist das Kommunikationsnetz ein Mobilfunknetz, so ist der Testserver beziehungsweise die im Kommunikationsnetz bereitgestellte Recheneinrichtung vorteilhafterweise an das MMSC (MMSC: Multimedia Messaging Center) des Mobilfunknetzes angebunden, sodass ein Datentransfer zwischen diesen Komponenten stattfinden kann. Andere Anbindungen seitens des Kommunikationsnetzes sind ebenfalls möglich.

Das Generieren eines Testprogramms seitens der im Kommunikationsnetz bereitgestellten Recheneinrichtung erfolgt auf Basis wenigstens einer Information, die an die Recheneinrichtung übertragen wird. Im einfachsten Fall hält die Recheneinrichtung eine Vielzahl von Testprogrammen vor. Das Generieren umfasst hier lediglich die Auswahl eines Testprogramms anhand der übertragenen Information. Zusätzlich oder alternativ kann die Recheneinrichtung auch Testprogramme enthalten, die hinsichtlich des durchzuführenden Tests parametriert werden müssen. Die notwendigen Parameter sind in den übertragenen Informationen enthalten und werden im Rahmen der Generierung in das Testprogramm eingebunden. Die übertragenen Informationen können aber auch derartig gestaltet sein, dass im Rahmen der Generierung des Testprogramms ein auf der Recheneinrichtung laufendes Programm anhand der Informationen entsprechende Routinen erzeugt und diese zu einem Testprogramm zusammenfügt. Die hier genannten Varianten dienen lediglich der Veranschaulichung und sind für das Verfahren nicht beschränkend. So sind andere Varianten zur Generierung des Programms ebenso denkbar.

Die Information hinsichtlich des durchzuführenden Tests wird beispielsweise von der den Test durchführenden beziehungsweise initiierenden Person über eine weitere Recheneinrichtung der im Kommunikationsnetz bereitgestellten Recheneinrichtung mitgeteilt. Vorteilhafterweise kann die Information aber auch direkt von dem zu testenden Endgerät an die im Kommunikationsnetz bereitgestellte Recheneinrichtung übertragen werden. Tritt beispielsweise während der Ausführung eines auf dem Endgerät laufenden Anwendungsprogramms ein Fehler auf, der von dem Programm als solcher erkannt wird, so bewirkt das Anwendungsprogramm, dass eine entsprechende Information an die im Kommunikationsnetz bereitgestellte Recheneinrichtung gesendet wird, wodurch ein geeigneter Test hinsichtlich des auf dem Endgerät laufendend Anwendungsprogramms initiiert wird. Neben anderen Varianten ist ebenso denkbar, dass der Bediener des Endgeräts das Senden einer entsprechenden Information mittels des Endgerätes an die im Kommunikationsnetz bereitgestellte Recheneinrichtung veranlasst, um ein Testen des Endgerätes beziehungsweise eines darauf laufenden Programmes zu initiieren.

Neben der Information hinsichtlich des durchzuführenden Tests wird zudem eine das zu testende Endgerät identifizierende Kennung an die im Kommunikationsnetz bereitgestellte Recheneinrichtung übertragen. Basierend auf dieser Kennung wird das zu testende Endgerät im Kommunikationsnetz eindeutig bestimmt, sodass das generierte Testprogramm an das zu testende Endgerät übertragen werden kann. Die identifizierende Kennung ist beispielsweise die IP-Adresse, unter der das zu testende Endgerät im Kommunikationsnetz erreichbar ist. Falls es sich bei dem Kommunikationsnetz um ein Mobilfunknetz handelt, ist diese Kennung vorteilhafterweise eine dem Endgerät beziehungsweise dem Mobilfunkteilnehmeridentifikationsmodul seitens des Mobilfunknetzbetreibers zugewiesene Teilnehmerkennung. Erfindungsgemäß ist vorgesehen, dass das Übertragen der das zu testende Endgerät identifizierenden Kennung an die im Kommunikationsnetz bereitgestellte Recheneinrichtung vorteilhafterweise auf unterschiedliche Weise erfolgt. Analog zu oben genanntem Beispiel hinsichtlich der Übertragung der wenigstens einen Information hinsichtlich des durchzuführenden Tests wird in einer Ausführungsvariante vorteilhafterweise die das zu testende Endgerät identifizierende Kennung von der den Test durchführenden beziehungsweise initiierenden Person über eine weitere Recheneinrichtung der im Kommunikationsnetz bereitgestellten Recheneinrichtung mitgeteilt. Die das zu testende Endgerät identifizierende Kennung ist vorteilhafterweise aber auch direkt von dem zu testenden Endgerät an die im Kommunikationsnetz bereitgestellte Recheneinrichtung übertragbar. Andere Wege der Übertragung der das zu testende Endgerät identifizierenden Kennung sind ebenfalls denkbar. In speziellen Anwendungsfällen kann die das zu testende Endgerät identifizierende Kennung zugleich die wenigstens eine Information hinsichtlich des wenigstens einen durchzuführenden Tests sein.

Ist das Testprogramm generiert und an das zu testende Endgerät übertragen worden, wird das Testprogramm vorteilhafterweise seitens des zu testenden Endgeräts zur Ausführung gebracht. Dies umfasst gegebenenfalls entsprechende Installations- und/oder Initialisierungsvorgänge, die durch die den Test durchführende Person oder aus dem Testprogramm heraus oder mittels eines auf dem zu testenden Endgerät bereitgehaltenen Hilfsprogramms gestartet werden.

Erfindungsgemäß ist vorgesehen, dass aus der wenigstens einen übertragenen Information hinsichtlich des durchzuführenden Tests wenigstens eine Testspezifikation generiert wird, durch welche vorzugsweise in formalisierter Weise wenigstens ein zu testendes Merkmal definiert wird. Durch die Generierung einer Testspezifikation werden durchzuführende Tests vorteilhafterweise vereinheitlicht und besser dokumentierbar. Insbesondere lässt sich nach Testdurchführung vorteilhafterweise leichter überprüfen, ob die geforderten Spezifikationen eingehalten wurden. Des Weiteren ist der Test vorteilhafterweise auf besonders einfache Weise auf auswählbare Merkmale beschränkbar. Betrifft die übertragene Information beispielsweise eine einzelne Funktionstaste eines Endgerätes, so beinhaltet die generierte Spezifikation auch nur Vorgaben zu Funktionalitäten dieser einzelnen Funktionstaste. Die Vorgabe beinhalten dann zum Beispiel das Merkmal "Taste leuchtet nach Betätigung", welches durch das später aus der Testspezifikation generierte Testprogramm getestet wird. Durch das formalisierte Verfassen der Information hinsichtlich des durchzuführenden Tests, insbesondere unter Einhaltung definierter Standards, wird die spätere Generierung des Testprogramms vorteilhafterweise vereinfacht sowie eine automatisierte Generierung ermöglicht.

Es ist vorgesehen, dass das Testprogramm auf Basis der wenigstens einen Testspezifikation generiert wird.

Die wenigstens eine Information hinsichtlich des wenigstens einen durchzuführenden Tests ist eine dem zu testenden Endgerät zugeordnete Dokumentation im Sinne eines Handbuchs. Da die Dokumentation eines Endgerätes beziehungsweise eines Programms den Funktionsumfang und die Bedienung üblicherweise im Wesentlichen vollständig beschreibt, eignet sich die Dokumentation in besonders vorteilhafter Weise dazu, Testspezifikationen festzulegen, welche gerade die in der Dokumentation beschriebenen, später zu überprüfenden Funktionalitäten formalisiert beinhalten. Durch Verwendung der Dokumentation als Basis für das zu generierende Testprogramm werden im Rahmen der Testdurchführung vorteilhafterweise möglicherweise in der Dokumentation auftretende Fehler erkannt, sodass diese korrigiert werden können. Führt zum Beispiel im Rahmen eines Endgerätetests eine Eingabe nicht zu der in der Dokumentation beschriebenen Ausgabe, so liegt entweder ein Gerätefehler oder ein Fehler in der Dokumentation vor.

Die dem zu testenden Endgerät zugeordnete Dokumentation ist gemäß wenigstens einem definierten Standard gestaltet. Unabhängig von dem zu testenden Endgerät beziehungsweise von dem zu testenden Programm ist die Dokumentation bezüglich des Aufbaus gleich angelegt, beispielsweise tabellarisch, wobei vorteilhafterweise in einer Spalte der Tabelle die Funktionalität beschrieben ist, in einer weiteren Spalte vorteilhafterweise die zur Ausführung der Funktionalität benötigten Eingaben, also zum Beispiel Tastenkombinationen, angegeben sind und in einer weiteren Spalte vorteilhafterweise die Eingabe beziehungsweise das Ergebnis der Eingabe visualisierende Screenshots dargestellt sind.

In einer Ausführungsvariante der vorliegenden Erfindung wird die das zu testende Endgerät identifizierende Kennung gemeinsam mit der wenigstens einen Information hinsichtlich des wenigstens einen durchzuführenden Tests an die im Kommunikationsnetz bereitgestellte Recheneinrichtung übertragen. Hierdurch reduziert sich vorteilhafterweise die Anzahl der Sende- und/oder Empfangsvorgänge, wodurch das Verfahren weiter vereinfacht wird.

Falls das Kommunikationsnetz ein Mobilfunknetz ist, vorzugsweise ein Mobilfunknetz gemäß einem GSM-, GPRS-, UMTS und/oder LTE-Funknetzstandard, sieht eine Ausgestaltung des erfindungsgemäßen Verfahrens vor, dass die Übertragung des generierten Testprogramms an das zu testende Endgerät mittels wenigstens eines Dienstes des Mobilfunknetzes erfolgt, vorzugsweise mittels SMS (SMS: Short Message Service), MMS (MMS: Multimedia Message Service) und/oder WAP (WAP: Wireless Application Protocol). Insbesondere für das Testen von in Mobilfunknetzen betreibbaren Endgeräten wird die Durchführung von erfindungsgemäßen Tests vorteilhafterweise weiter vereinfacht.

Ist das Kommunikationsnetz ein Mobilfunknetz, insbesondere gemäß einem GSM-, GPRS-, UMTS und/oder LTE-Funknetzstandard, sieht eine weitere Variante des erfindungsgemäßen Verfahrens vor, dass die das zu testende Endgerät identifizierende Kennung eine dem Endgerät zugeordnete Rufnummer, vorzugsweise die MSISDN (MSISDN: Mobile Subscriber Integrated Services Digital Network Number), oder die dem Mobilfunkteilnehmeridentifikationsmodul zugewiesene IMSI (IMSI: International Mobile Subscriber Identity) ist. Insbesondere in Verbindung mit der Übertragung des generierten Testprogramms mittels wenigstens eines Dienstes des Mobilfunknetzes wird die Durchführung von erfindungsgemäßen Tests vorteilhafterweise noch weiter vereinfacht. Des Weiteren lässt sich vorteilhafterweise das zu testende Endgerät zuverlässig jederzeit wieder identifizieren, beispielsweise zur Durchführung weiterer Tests oder zur Analyse von im Rahmen der Testdurchführung detektierten Fehler.

In einer weiteren Ausführungsvariante des erfindungsgemäßen Verfahrens ist das Testprogramm ein Applet. Hierdurch ist das Testprogramm vorteilhafterweise sehr universell einsetzbar, da Applets üblicherweise in einem Web-Browser laufen aber beispielsweise auch unter Verwendung von Java Card auf einer SIM-Karte lauffähig sind.

In einer weiteren Ausgestaltung der Erfindung wird das Testprogramm daher seitens des Mobilfunkteilnehmeridentifikationsmoduls (SIM, SIM: Subscriber Identity Module) des zu testenden Endgerätes ausgeführt.

Eine bevorzugte Ausgestaltung des erfindungsgemäßen Verfahrens sieht vor, dass das Testprogramm vor dem Übertragen verschlüsselt und/oder zertifiziert wird. Vorteilhafterweise wird auf diese Weise ein wirksamer Schutz vor Manipulationen am Testprogramm bereitgestellt. Die Zertifizierung des Testprogramms erfolgt dabei vorzugsweise nach dem TCSEC- (TCSEC: Trusted Computer System Evaluation Criteria) oder dem ITSEC-Standard (ITSEC: Information Technology Security Evaluation Criteria) für die Zertifizierung von Softwareprodukten.

Erfindungsgemäß ist vorgesehen, dass im Rahmen der Ausführung des Testprogramms zumindest teilautomatisch Testdaten bezüglich des durchzuführenden Tests erfasst werden. Als Testdaten werden insbesondere im Rahmen des Tests erfolgende Tastatureingaben sowie entsprechende Ausgaben seitens des zu testenden Endgerätes beziehungsweise des auf dem zu testenden Endgerät laufenden Programms erfasst, sodass vorteilhafterweise im Wesentlichen der gesamte Testablauf erfassbar ist.

Eine weitere Ausgestaltungsvariante des erfindungsgemäßen Verfahrens sieht vor, dass die im Rahmen der Ausführung des Testprogramms erfassten Testdaten zumindest teilweise an die im Kommunikationsnetz bereitgestellte Recheneinrichtung übertragen werden. Durch das Übertragen der Testdaten an die im Kommunikationsnetz bereitgestellte Recheneinrichtung stehen die Testdaten vorteilhafterweise für eine Auswertung der Testdaten seitens der Recheneinrichtung zur Verfügung. Da die Recheneinrichtung vorteilhafterweise speziell für die Auswertung derartiger Testdaten ausgebildet ist, sind Auswertungen seitens der Recheneinrichtung schneller auswertbar als seitens des auf dem zu testenden Endgerät laufenden Testprogramms. Des Weiteren kann die im Kommunikationsnetz bereitgestellte Recheneinrichtung vorteilhafterweise die an die Recheneinrichtung übertragenen Testdaten zentral verwalten und auf diese Weise insbesondere Testdaten, die aus gleichen Tests auf gleichen Endgeräten erfasst wurden, vergleichen, sodass vorteilhafterweise Aussagen darüber treffbar sind, ob ein Fehler einer Baureihe anhaftet, oder nur einem einzelnen Gerät.

In einer bevorzugten Ausgestaltung des erfindungsgemäßen Verfahrens wird seitens der im Kommunikationsnetz bereitgestellten Recheneinrichtung basierend auf den empfangenen Testdaten ein Testreport generiert. Anhand dieses Testreports ist vorteilhafterweise ersichtlich, ob das zu testende Endgerät beziehungsweise das zu testende Programm spezifikationsgemäß funktioniert. Sollte dies nicht der Fall sein, ist dem Testreport vorteilhafterweise entnehmbar, in welchen Anwendungssituationen mit dem Auftreten von Fehlern zu rechnen ist.

Entsprechend einem beispielhaften, nicht beanspruchten Verfahren wird zum zumindest teilweise automatisierten Testen von in Kommunikationsnetzen, insbesondere Telekommunikationsnetzen, vorzugsweise Mobilfunknetzen gemäß einem GSM-, GPRS-, UMTS und/oder LTE-Funknetzstandard, betreibbaren Endgeräten und/oder von auf diesen Endgeräten laufenden Programmen, insbesondere

Anwendungs- und/oder Systemprogrammen, unter Nutzung eines auf dem Endgerät ausführbaren Testprogramms vorgeschlagen, dass die Ausführung des Testprogramms auf dem Endgerät initiiert wird, das Testprogramm im Rahmen der Ausführung zumindest teilautomatisch Testdaten hinsichtlich des durchzuführenden Test erfasst, im Rahmen der Ausführung die erfassten Testdaten zumindest teilweise an eine im Kommunikationsnetz bereitgestellte Recheneinrichtung übertragen werden und seitens der im Kommunikationsnetz bereitgestellten Recheneinrichtung basierend auf den empfangenen Testdaten ein Testreport generiert wird. Bei einem derartigen Verfahren ist vorteilhafterweise zunächst keine Anbindung an die im Kommunikationsnetz bereitgestellte Recheneinrichtung notwendig. Das Testprogramm kann vorteilhafterweise bereits herstellerseitig auf dem zu testenden Endgerät bereitgestellt sein. Das zu testende Endgerät lässt sich vorteilhafterweise zunächst bestimmungsgemäß nutzen, wobei sämtliche die Nutzung betreffenden Ein- und Ausgaben als Testdaten quasi als Nutzungsprotokoll erfasst werden und diese Testdaten zu einem späteren Zeitpunkt zur Generierung eines Testreports mit einer damit verbundenen Auswertung an die im Kommunikationsnetz bereitgestellte Recheneinrichtung übertragen werden.

Erfindungsgemäß sind vorteilhafterweise die nachfolgend angeführten Ausgestaltungen für das erfindungsgemäße Verfahren vorgesehen:
In einer erfindungsgemäßen Ausgestaltung erfolgt die Übertragung der erfassten Testdaten mittels wenigstens eines Dienstes eines Mobilfunknetzes, vorzugsweise mittels SMS (SMS: Short Message Service), MMS (MMS: Multimedia Message Service) und/oder WAP (WAP: Wireless Application Protocol). Hierdurch wird die Durchführung eines erfindungsgemäßen Tests vorteilhafterweise weiter vereinfacht. Ebenso kann zur Übertragung aber auch eine Datenverbindung unter Nutzung eines Dienstes gemäß GSM, GPRS, UMTS oder LTE verwendet werden. Je nach Anwendungssituation sind auch NFC (NFC: Near Field Communication), Bluetooth, WLAN oder Infrarot für die Übertragung einsetzbar.

Eine weitere bevorzugte Ausgestaltung sieht vor, dass die erfassten Testdaten wenigstens auf dem zu testenden Endgerät getätigte Eingaben und/oder seitens des zu testenden Endgerätes erzeugte Ausgaben und/oder eine das zu testende Endgerät identifizierende Kennung und/oder ein Datum bezüglich des zu testenden Endgerätes und/oder im Rahmen des Tests manuell hinzugefügte Einträge umfassen. Bezüglich der Ein- und Ausgaben des zu testenden Endgerätes ist es insbesondere auch vorgesehen, dass sogenannte Screenshots erstellt werden, mit deren Hilfe eine spezifikationsgemäße Funktionalität noch besser überprüfbar ist. Insbesondere ist das erfindungsgemäße Verfahren auch geeignet, Kunden einen verbesserten Support bei auftretenden Problemen mit erworbenen Endgeräten oder Anwendungsprogrammen bereitzustellen. Ist das zu testende Endgerät beispielsweise ein in einem Mobilfunknetz betreibbares mobiles Endgerät, so ist kann der Kunde eines Mobilfunknetzbetreibers beispielsweise durch Wahl einer seitens des Mobilfunknetzbetreibers bereitgestellten Servicenummer ein erfindungsgemäßes Verfahren initiieren. Während der Durchführung der Verfahrens erfasste und an die im Kommunikationsnetz bereitgestellte Recheneinrichtung übertragene Testdaten können an einen Servicemitarbeiter des Mobilfunknetzbetreibers weitergeleitet werden, sodass dieser anhand der weitergeleiteten Daten den Kunden eine bessere Hilfestellung geben kann.

In einer weiteren Ausgestaltung der vorliegenden Erfindung werden die empfangenen Testdaten seitens der im Kommunikationsnetz bereitgestellten Recheneinrichtung in einen Testreport eingefügt.

Eine bevorzugte Ausgestaltung sieht vor, dass die empfangenen Testdaten seitens der im Kommunikationsnetz bereitgestellten Recheneinrichtung mit zu erwartenden Testdaten verglichen werden. Bezogen auf das oben genannte Beispiel des verbesserten Supports seitens eines Mobilfunknetzbetreibers ist insbesondere durch den Datenvergleich der seitens der im Kommunikationsnetz bereitgestellten Recheneinrichtung generierte Testreport derart gestaltbar, dass dieser auf eine Fehlbedienung seitens des Kunden aufmerksam macht und einen geeigneten Korrekturvorschlag beinhaltet, wobei der generierte Testreport an das mobile Endgerät des Kunden übertragen wird. Der Vergleich von empfangenen Testdaten mit zu erwartenden Testdaten ermöglicht vorteilhafterweise insbesondere bei Produkttests im Rahmen von Produktfreigaben Bewertungen hinsichtlich der Funktionsfähigkeit von Produkten.

In einer weiteren bevorzugten Ausgestaltung der Erfindung basieren die zu erwartenden Testdaten auf wenigstens einer Information hinsichtlich wenigstens eines erfindungsgemäß durchzuführenden Tests. So werden die zu erwartenden Testdaten beispielsweise aus einer dem zu testenden Endgerät zugeordneten Dokumentation extrahiert.

Außerdem wird mit der vorliegenden Erfindung eine Recheneinrichtung zum Betrieb in einem Mobilfunknetz gemäß einem GSM-, GPRS-, UMTS- und/oder LTE-Funknetzstandard, wobei die Recheneinrichtung dazu eingerichtet ist, zur Bestimmung eines zu testenden Endgerätes eine das zu testende Endgerät identifizierende Kennung zu empfangen, wenigstens eine Information hinsichtlich wenigstens eines durchzuführenden Tests zu empfangen, auf Basis der wenigstens einen übertragenen Information hinsichtlich des wenigstens einen durchzuführenden Tests wenigstens ein Testprogramm zu generieren, wobei es sich bei der Information um eine standardisiert aufgebaute und als Handbuch für das zu testende Endgerät dienende Dokumentation handelt, so dass aus dem Aufbau der Dokumentation heraus automatisiert eine Testspezifikation erstellbar ist, durch welche in formalisierter Weise wenigstens ein zu testendes Merkmal definierbar ist, und das generierte Testprogramm an das zu testende Endgerät zu übertragen, wobei die Recheneinrichtung dazu ausgebildet und/oder eingerichtet ist, die seitens der Recheneinrichtung auszuführenden Verfahrensschritte des erfindungsgemäßen Verfahrens auszuführen.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: eine Prinzipdarstellung eines erfindungsgemäßen Ausführungsbeispiels für einen Auszug aus einer einem zu testenden Endgerät zugeordneten, einem definierten Standard entsprechenden Dokumentation im Sinne eines Handbuchs,
- Fig. 2: eine weitere Prinzipdarstellung eines erfindungsgemäßen Ausführungsbeispiels für einen Auszug aus einer einem zu testenden Endgerät zugeordneten, einem definierten Standard entsprechenden Dokumentation im Sinne eines Handbuchs,
- Fig. 3: eine Prinzipdarstellung eines Ausführungsbeispiels für eine erfindungsgemäß generierte Testspezifikation,
- Fig. 4: eine Prinzipdarstellung eines Ausführungsbeispiels zur Verdeutlichung einer erfindungsgemäßen Eintragung von empfangenen Testdaten sowie eines erfindungsgemäßen Vergleichs von zu erwartenden Testdaten und empfangenen Testdaten und
- Fig. 5: eine Prinzipdarstellung eines Ausführungsbeispiels zur Durchführung eines erfindungsgemäßen Verfahrens.

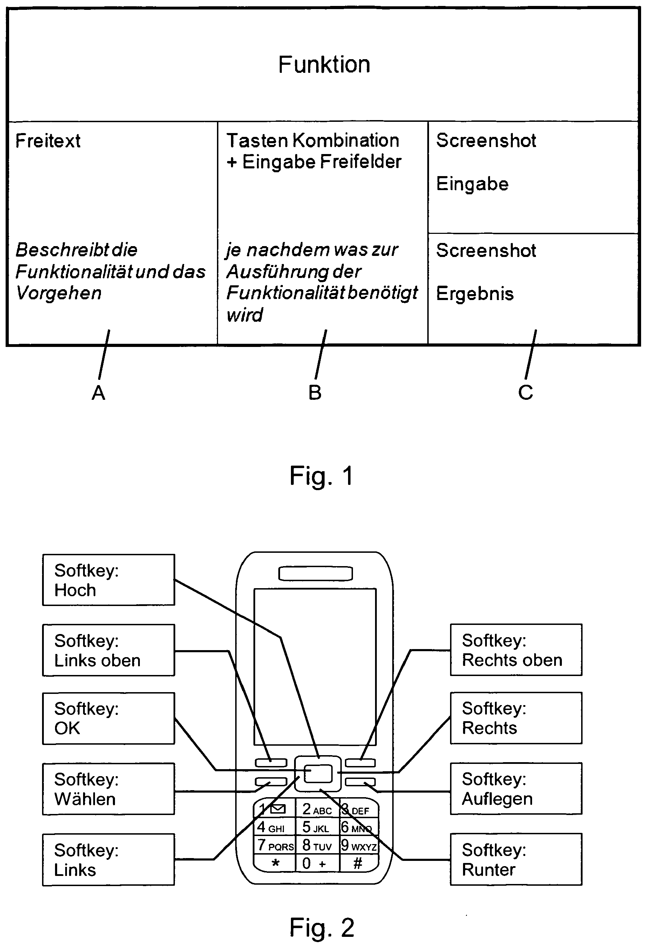

Fig. 1 zeigt beispielhaft den Aufbau einer einem zu testenden Endgerät zugeordneten Dokumentation. Diese Dokumentation, die gleichsam als Handbuch für das zu testende Endgerät dient, stellt vorliegend die Information hinsichtlich eines durchzuführenden Tests dar, die im Rahmen des Verfahrens zum Testen von in Kommunikationsnetzen betreibbaren Endgeräten und/oder auf diesen Endgeräten laufenden Programmen, zum Testen eines Endgerätes an eine im Kommunikationsnetz betreibbare Recheneinrichtung übertragen wird. Die Dokumentation ist dabei vorteilhafterweise derartig standardisiert aufgebaut, dass sich aus dem Aufbau der Dokumentation heraus automatisiert eine Testspezifikation erstellen lässt. Dazu weist die Dokumentation vorliegend für jede Funktion einen gleichbleibend gestalteten dreispaltigen Aufbau A, B, C auf. In Spalte A ist in Textform die jeweilige Funktionalität beschrieben, sowie das Vorgehen, um die Funktionalität aufzurufen beziehungsweise zu nutzen. In Spalte B ist die zur Ausführung der Funktionalität benötigte Tastenkombination angegeben beziehungsweise die gegebenenfalls in einem entsprechenden Feld zu tätigende Eingabe. In Spalte C sind Screenshots dargestellt, wobei die Spalte C wenigstens einen Screenshot von der zu tätigenden Eingabe aufweisen sollte und wenigstens einen Screenshot von dem aus der Eingabe resultierenden Ergebnis. Sind mehrere Eingaben erforderlich, kann sich so eine Reihe von Darstellungen von Eingaben sowie daraus resultierenden Zwischenergebnissen ergeben, wobei die Zwischenergebnisse die Basis für weitere Eingaben darstellen. Für einen einfachen Datenaustausch kann die Dokumentation beispielsweise auf Basis von XML erfolgen.

Damit im später durchzuführenden Verfahren die einzugebenden Tastenkombinationen mit den tatsächlich eingegebenen Tastenkombinationen verglichen werden können, ist es vorteilhafterweise vorgesehen, dass in der Dokumentation eine Definition der Tastenbelegung eines zu testenden Endgerätes angegeben ist. In Fig. 2 wird in einer Prinzipdarstellung beispielhaft für ein Mobilfunktelefon die Definition von Tastenbelegungen veranschaulicht.

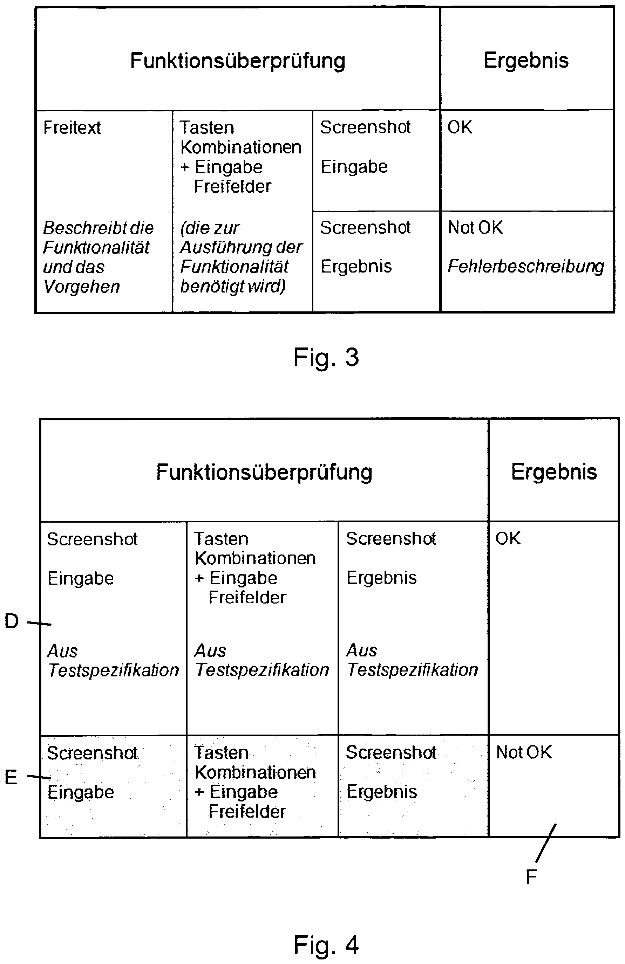

In Fig. 3 ist beispielhaft dargestellt wie aus der an die im Kommunikationsnetz bereitgestellte Recheneinrichtung übertragene Dokumentation eine Testspezifikation generierbar ist. Die Dokumentation wird im Rahmen der Generierung der Testspezifikation dahingehend erweitert, dass die Funktionserläuterung zur Funktionsüberprüfung herangezogen wird. Dabei wird aus der Beschreibung heraus festgelegt, wie sich das korrekte Ergebnis ("OK") darstellt und welches Ergebnis fehlerhaft ("Not OK") ist. Diesen fehlerhaften Ergebnissen können zusätzlich Fehlerbeschreibungen zugeordnet werden.

Fig. 4 verdeutlicht beispielhaft die im Rahmen der Testdurchführung erfolgende Funktionsüberprüfung basierend auf der Testspezifikation. So werden anhand der Vorgaben aus der Dokumentation zu erwartende Testdaten extrahiert. Diese Vorgaben können Screenshots zur nutzerseitig zu vollziehenden Eingabe, als Eingabe erforderliche Tastenkombinationen oder das Ergebnis der Funktionsausführung darstellende Screenshots sein. Im Rahmen der Testdurchführung erfasste und an die im Kommunikationsnetz bereitgestellte Recheneinrichtung übertragene Testdaten werden seitens der Recheneinrichtung mit den zu erwartenden Testdaten verglichen. Der Vergleich ergibt, ob die erfassten Testdaten mit den zu erwartenden Testdaten übereinstimmen (Ergebnis "OK") oder nicht übereinstimmen (Ergebnis "Not OK"). Zur Dokumentation des Ergebnisses wird seitens der Recheneinrichtung ein Testreport generiert. Dieser kann zum Beispiel die in Fig. 4 dargestellte Form haben, wobei in einer Zeile D die zu erwartenden Testdaten aufgelistet sind und in einer weiteren Zeile E (hier grau hinterlegt) die entsprechenden tatsächlich erfassten Testdaten. In einer Ergebnisspalte F wird dargestellt, ob die zu überprüfende Funktionalität des zu testenden Endgeräts fehlerfrei ("OK") oder fehlerbehaftet ("Not OK") ist.

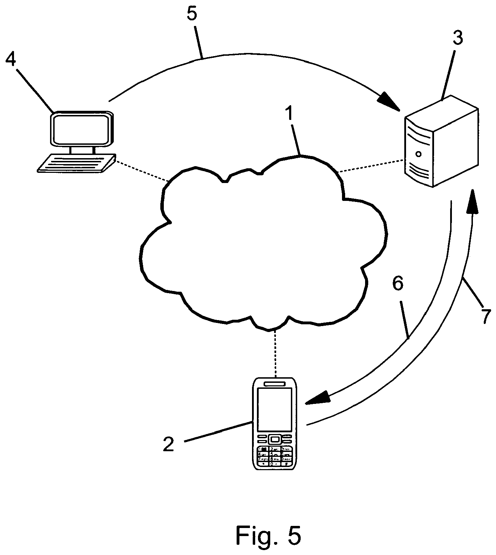

In Fig. 5 ist ein Ausführungsbeispiel zur Durchführung eines erfindungsgemäßen Verfahrens skizziert. Vorliegend ist ein in einem Mobilfunknetz 1 - in Fig. 5 schematisch durch eine Wolke dargestellt - betreibbares mobiles Endgerät 2 seitens des Herstellers zu testen. Die Verbindung der einzelnen Komponenten mit dem Mobilfunknetz ist jeweils durch eine gestrichelte Linie verdeutlicht.

Zur Bestimmung des zu testenden mobilen Endgeräts 2 überträgt der Hersteller eine das zu testende mobile Endgerät 2 identifizierende Kennung an eine im Kommunikationsnetz 1 betreibbare Recheneinrichtung 3, vorliegend einen Testserver 3. Als Kennung nutzt der Hersteller die dem Endgerät 2 zugeordnete MSISDN (MSISDN: Mobile Subscriber Integrated Services Digital Network Number), die er über ein an das Mobilfunknetz 1 angeschlossenes Computerterminal 4 dem Testserver 3 mitteilt. Des Weiteren lädt der Hersteller eine dem zu testenden Endgerät 2 zugeordnete Dokumentation auf den Testserver 3. Die im Wesentlichen unidirektional ausgerichtete Kommunikation zwischen dem Computerterminal 4 und dem Testserver 3 ist durch den Pfeil 5 verdeutlicht. Die Dokumentation ist vorliegend wie in Fig. 1 dargestellt gestaltet. Der Testserver 3 erstellt aus der Dokumentation eine Testspezifikation (vgl. Fig. 3). Anhand der Testspezifikation erstellt der Testserver 3 ein Testprogramm. Hierzu liegt bereits ein entsprechendes Rumpfprogramm vor, welches mittels der aus der Testspezifikation extrahierten zu erwartenden Testdaten parametriert wird. Vorliegend ist das generierte Testprogramm ein SIM-Applet. Um der Gefahr von Manipulationen an dem generierten Applet durch Hacker entgegenzuwirken und die Daten vor unberechtigtem Zugriff zu schützen, wird das Applet verschlüsselt und gemäß dem ITSEC-Standard digital zertifiziert.

Das Applet wird dann von dem Testserver 3 an das mobile Endgerät 2 übertragen, was in der Fig. 5 symbolisch durch den Pfeil 6 dargestellt ist. Zur Übertragung leitet der Testserver 3 das Applet an einen sogenannte OTA-Server (OTA: Over the Air) weiter (in Fig. 5 nicht dargestellt), von dem es unter Verwendung des Short Message Services (SMS) an das Endgerät 2 gesendet wird. Je nach Herstellervorgabe kann das Versenden mit oder ohne zeitliche Befristung erfolgen.

Das von dem zu testenden mobilen Endgerät 2 empfangene Applet wird auf dem Endgerät 2 zur Ausführung gebracht. Im Rahmen der Ausführung wird das Endgerät 2 neu gestartet und bei Neustart in einen definierten Ausgangszustand (nach Herstellervorgabe) gebracht. Wahlweise kann direkt zu Beginn die Dauer des Tests festgelegte werden. Das kann entweder durch den Hersteller erfolgen, indem dieser zu Beginn des Verfahrens, das heißt wenn die Kennung und die Dokumentation über das Computerterminal 4 hochgeladen werden, eine entsprechende zusätzliche Information an den Testserver 3 sendet, oder durch Vorgabe des das mobile Endgerät 2 bedienenden Testers (in Fig. 5 nicht dargestellt).

Nach Abschluss dieser Initialisierungsphase beginnt der eigentliche Test. Das Testprogramm fordert den Tester zu bestimmten, aus der Testspezifikation abgeleiteten Eingaben auf. Es erfasst dabei alle Tastatureingaben sowie die durch die Tastatureingaben bewirkten Ergebnisse. Diese Ergebnisse werden beispielsweise als Screenshot gespeichert. All diese erfassten Daten werden später als Testdaten an den Testserver 3 übertragen. Diesen Testdaten wird zudem zur Verifizierung, dass das gewünschte Endgerät 2 getestet wurde, die dem Endgerät 2 zugewiesene MSISDN hinzugefügt. Des Weiteren werden aus dem Endgerät 2 noch die IMEI sowie Informationen zur verwendeten Firmware ausgelesen und ebenfalls den Testdaten hinzugefügt. Zudem besteht die Option, dass der Tester selbst Daten manuell hinzufügt, beispielsweise den Tester authentizierende Daten aber auch testbezogene Daten. Die erfassten Testdaten werden per MMS an den Testserver 3 übertragen, was in Fig. 5 durch den Pfeil 7 dargestellt ist. Die erfassten Testdaten können zunächst auf dem mobilen Endgerät 2 beziehungsweise dessen Identifikationsmodul gespeichert und nach erfolgtem Test gesammelt übertragen werden. Optional, insbesondere um das Speichern von Testdaten zu begrenzen, kann jedes erfasste Testdatum auch direkt an den Testserver 3 übertragen werden, sodass beispielsweise folgende erfasste Testdaten jeweils separat per MMS übertragen werden: Screenshot "Start", Eingabe, Screenshot "Eingabe", Eingabe, Screenshot "Ergebnis". Seitens des Testservers 3 werden die übertragenen Testdaten mit den zu erwartenden Testdaten aus der Testspezifikation verglichen. Des Weiteren wird ein Testreport generiert, in den die Ergebnisse des Vergleichs eingetragen werden (vgl. Fig. 4).

Die in den Figuren der Zeichnungen dargestellten Ausführungsbeispiele der Erfindung und die in Zusammenhang mit diesen Ausführungsbeispielen beschriebenen Ausführungsbeispiele der Erfindung dienen lediglich der Erläuterung der Erfindung und sind für diese nicht beschränkend.

### Bezugszeichenliste:

- A: Spalte in Dokumentation
- B: weitere Spalte in Dokumentation
- C: weitere Spalte in Dokumentation
- D: Zeile in Testreport
- E: Zeile in Testreport
- F: Spalte in Testreport
- 1: Mobilfunknetz (Kommunikationsnetz)
- 2: (mobiles) Endgerät
- 3: Testserver (im Kommunikationsnetz bereitgestellte Recheneinrichtung)
- 4: Computerterminal
- 5: Übertragung: Computerterminal - Testserver
- 6: Übertragung: Testserver - mobiles Endgerät
- 7: Übertragung: mobiles Endgerät - Testserver

## Patentansprüche

1. Verfahren zum zumindest teilweise automatisierten Testen von in Mobilfunknetzen (1) gemäß einem GSM-, GPRS-, UMTS- und/oder LTE-Funknetzstandard betreibbaren Endgeräten (2) und/oder von auf diesen Endgeräten laufenden Programmen unter Nutzung eines auf dem Endgerät (2) ausführbaren Testprogramms und einer im Mobilfunknetz (1) bereitgestellten Recheneinrichtung (3),
wobei
- zur Bestimmung des zu testenden Endgerätes (2) eine das zu testende Endgerät identifizierende Kennung an die im Mobilfunknetz (1) bereitgestellte Recheneinrichtung (3) übertragen wird,
- wenigstens eine Information hinsichtlich des wenigstens einen durchzuführenden Tests an die im Mobilfunknetz (1) bereitgestellte Recheneinrichtung (3) übertragen wird,
- seitens der im Mobilfunknetz (1) bereitgestellten Recheneinrichtung (3) auf Basis der wenigstens einen übertragenen Information hinsichtlich des wenigstens einen durchzuführenden Tests wenigstens ein Testprogramm generiert wird, wobei es sich bei der Information um eine standardisiert aufgebaute und als Handbuch für das zu testende Endgerät dienende Dokumentation handelt, so dass aus dem Aufbau der Dokumentation heraus automatisiert eine Testspezifikation erstellbar ist, durch welche in formalisierter Weise wenigstens ein zu testendes Merkmal definierbar ist,
- das generierte Testprogramm an das zu testende Endgerät (2) übertragen wird,
- das seitens des zu testenden Endgeräts (2) empfangene Testprogramm zur Ausführung gebracht wird, und
- im Rahmen der Ausführung des Testprogramms zumindest teilautomatisch Testdaten bezüglich des durchzuführenden Tests erfasst werden, wobei
die erfassten Testdaten wenigstens auf dem zu testenden Endgerät (2) getätigte Eingaben und/oder seitens des zu testenden Endgerätes (2) erzeugte Ausgaben und/oder eine das zu testende Endgerät (2) identifizierende Kennung und/oder ein Datum bezüglich des zu testenden Endgerätes (2) und/oder im Rahmen des Tests manuell hinzugefügte Einträge umfassen.

2. Verfahren nach Anspruch 1, **dadurch gekennzeichnet, dass** das Testprogramm auf Basis der wenigstens einen Testspezifikation generiert wird, indem ein entsprechendes vorliegendes Rumpfprogramm mittels den aus der Testspezifikation extrahierten zu erwartenden Testdaten parametrisiert wird.

3. Verfahren nach Anspruch 1 oder Anspruch 2, **dadurch gekennzeichnet, dass** die das zu testende Endgerät (2) identifizierende Kennung gemeinsam mit der wenigstens einen Information hinsichtlich des wenigstens einen durchzuführenden Tests an die im Mobilfunknetz (1) bereitgestellte Recheneinrichtung (3) übertragen wird.

4. Verfahren nach einem der Ansprüche 1 bis 3, **dadurch gekennzeichnet, dass** die Übertragung (7) des generierten Testprogramms an das zu testende Endgerät (2) mittels wenigstens eines Dienstes des Mobilfunknetzes (1) erfolgt.

5. Verfahren nach einem der Ansprüche 1 bis 4, **dadurch gekennzeichnet, dass** die das zu testende Endgerät (2) identifizierende Kennung eine dem Endgerät (2) zugeordnete MSISDN (MSISDN: Mobile Subscriber Integrated Services Digital Network Number) oder die dem Mobilfunkteilnehmeridentifikationsmodul zugewiesene IMSI (IMSI: International Mobile Subscriber Identity) ist.

6. Verfahren nach einem der Ansprüche 1 bis 5, **dadurch gekennzeichnet, dass** das Testprogramm ein Applet ist.

7. Verfahren nach einem der Ansprüche 1 bis 6, **dadurch gekennzeichnet, dass** das Testprogramm seitens des Mobilfunkteilnehmeridentifikationsmoduls (SIM, SIM: Subscriber Identity Module) des zu testenden Endgerätes (2) ausgeführt wird.

8. Verfahren nach einem der Ansprüche 1 bis 7, **dadurch gekennzeichnet, dass** das Testprogramm vor dem Übertragen (7) verschlüsselt und/oder zertifiziert wird.

9. Verfahren nach einem der Ansprüche 1 bis 8, **dadurch gekennzeichnet, dass** die im Rahmen der Ausführung des Testprogramms erfassten Testdaten zumindest teilweise an die im Mobilfunknetz (1) bereitgestellte Recheneinrichtung (3) übertragen werden.

10. Verfahren nach einem der Ansprüche 1 bis 9, **dadurch gekennzeichnet, dass** seitens der im Mobilfunknetz (1) bereitgestellten Recheneinrichtung (3) basierend auf den empfangenen Testdaten ein Testreport generiert wird.

11. Verfahren nach Anspruch 9 oder Anspruch 10, **dadurch gekennzeichnet, dass** die empfangenen Testdaten seitens der im Mobilfunknetz (1) bereitgestellten Recheneinrichtung (3) in den Testreport eingefügt werden.

12. Verfahren nach Anspruch 10 oder Anspruch 11, **dadurch gekennzeichnet, dass** die empfangenen Testdaten seitens der im Mobilfunknetz (1) bereitgestellten Recheneinrichtung (3) mit zu erwartenden Testdaten verglichen werden.

13. Verfahren nach Anspruch 12, **dadurch gekennzeichnet, dass** die zu erwartenden Testdaten auf wenigstens einer Information hinsichtlich wenigstens eines durchzuführenden Tests nach einem Verfahren nach einem der Ansprüche 1 bis 10 basieren.

14. Recheneinrichtung (3) zum Betrieb in einem Mobilfunknetz (1) gemäß einem GSM-, GPRS-, UMTS- und/oder LTE-Funknetzstandard, wobei die Recheneinrichtung (3) dazu eingerichtet ist,
- zur Bestimmung eines zu testenden Endgerätes (2) eine das zu testende Endgerät (2) identifizierende Kennung zu empfangen,
- wenigstens eine Information hinsichtlich wenigstens eines durchzuführenden Tests zu empfangen,
- auf Basis der wenigstens einen übertragenen Information hinsichtlich des wenigstens einen durchzuführenden Tests wenigstens ein Testprogramm zu generieren, wobei es sich bei der Information um eine standardisiert aufgebaute und als Handbuch für das zu testende Endgerät dienende Dokumentation handelt, so dass aus dem Aufbau der Dokumentation heraus automatisiert eine Testspezifikation erstellbar ist, durch welche in formalisierter Weise wenigstens ein zu testendes Merkmal definierbar ist, und
- das generierte Testprogramm an das zu testende Endgerät (2) zu übertragen,
wobei
die Recheneinrichtung (3) dazu ausgebildet und/oder eingerichtet ist, die seitens der Recheneinrichtung (3) auszuführenden Verfahrensschritte eines Verfahrens nach einem der Ansprüche 1 bis 13 auszuführen.

## Claims

1. A method for the at least partially automatized testing of terminals (2) that can be operated in mobile radio networks (1) according to the GSM, GPRS, UMTS and/or LTE radio network standard and/or of programs running on these terminals using a test program that can be executed on the terminal (2) and a computer device (3) provided in the mobile radio network (1),
wherein
- an identifier that identifies the terminal to be tested will be transmitted to the computer device (3) provided in the mobile radio network (1) for determining the terminal (2) to be tested,
- at least one information item with respect to the at least one test to be executed will be transmitted to the computer device (3) provided in the mobile radio network (1),
- at least one test program will be generated by the computer device (3) provided in the mobile radio network (1) on the base of the at least one transmitted information item with respect to the at least one test to be executed, wherein the information item is a documentation that is structured in a standardized manner and serves as manual for the terminal to be tested, such that a test specification can be established in an automatized manner on the base of the structure of the documentation, by means of which test specification at least one feature to be tested can be defined in a formalized manner,
- the generated test program will be transmitted to the terminal (2) to be tested,
- the test program received by the terminal (2) to be tested will be executed, and
- within the scope of the execution of the test program test data with respect to the test to be executed will be gathered in an at least half-partially automatized way, wherein
the gathered test data comprise at least inputs made on the terminal (2) to be tested and/or outputs generated by the terminal (2) to be tested and/or an identifier that identifies the terminal (2) to be tested and/or a date with respect to the terminal (2) to be tested and/or entries that have been added manually within the scope of the test.

2. A method according to claim 1, **characterized in that** the test program is generated on the base of the at least one test specification, **in that** a corresponding present base program is parameterized by means of the test data to be expected and extracted from the test specification.

3. A method according to claim 1 or claim 2, **characterized in that** the identifier that identifies the terminal (2) to be tested will be transmitted together with the at least one information item with respect to the at least one test to be executed to the computer device (3) provided in the mobile radio network (1).

4. A method according to one of the claims 1 to 3, **characterized in that** the transmission (7) of the generated test program to the terminal (2) to be tested is realized by means of at least one service of the mobile radio network (1).

5. A method according to one of the claims 1 to 4, **characterized in that** the identifier that identifies the terminal (2) to be tested is an MSISDN (MSISDN : Mobile Subscriber Integrated Services Digital Network Number) assigned to the terminal (2) or the IMSI (IMSI: International Mobile Subscriber Identity) assigned to the mobile subscriber identification module.

6. A method according to one of the claims 1 to 5, **characterized in that** the test program is an applet.

7. A method according to one of the claims 1 to 6, **characterized in that** the test program will be executed by means of the mobile subscriber identification module (SIM, SIM: Subscriber Identity Module) of the terminal (2) to be tested.

8. A method according to one of the claims 1 to 7, **characterized in that** the test program will be encrypted and/or certified before transmission (7).

9. A method according to one of the claims 1 to 8, **characterized in that** the test data gathered within the scope of the execution of the test program will be at least partially transmitted to the computer device (3) provided in the mobile radio network (1).

10. A method according to one of the claims 1 to 9, **characterized in that** a test report will be generated by means of the computer device (3) provided in the mobile radio network on the base of the received test data.

11. A method according to claim 9 or claim 10, **characterized in that** the received test data will be included in the test report by means of the computer device (3) provided in the mobile radio network (1).

12. A method according to claim 10 or claim 11, **characterized in that** the received test data will be compared with test data to be expected by means of the computer device (3) provided in the mobile radio network (1).

13. A method according to claim 12, **characterized in that** the test data to be expected are based upon at least one information item with respect to at least one test to be executed according to a method according to one of the claims 1 to 10.

14. A computer device (3) that can be operated in a mobile radio network (1) according to a GSM, GPRS, UMTS and/or LTE radio network standard, wherein the computer device (3)is adapted to
- receive an identifier that identifies the terminal (2) to be tested for determining a terminal (2) to be tested,
- receive at least one information item with respect to at least one test to be executed,
- generate at least one test program on the base of the at least one transmitted information item with respect to the at least one test to be executed, wherein the information item is a documentation that is structured in a standardized manner and serves as manual for the terminal to be tested, such that a test specification can be established in an automatized manner on the base of the structure of the documentation, by means of which test specification at least one feature to be tested can be defined in a formalized manner,
- transmit the generated test program to the terminal (2) to be tested,
wherein
the computer device (3) is configured and/or adapted to carry out the process steps of a method according to one of the claims 1 to 13, which process steps are to be carried out by the computer device (3).

## Revendications

1. Procédé destiné à tester de manière au moins partiellement automatisée des terminaux (2) fonctionnant dans des réseaux radio mobile (1) selon le standard de réseau radio GSM, GPRS, UMTS et/ou LTE et/ou des programmes exécutés sur ces terminaux (2) en utilisant un programme de test exécutable sur le terminal (2) et un dispositif d'ordinateur (3) prévu dans le réseau radio mobile (1),
dans lequel
- un identifiant, qui identifie le terminal (2) à tester est transmis au dispositif d'ordinateur (3) prévu dans le réseau radio mobile (1) pour déterminer le terminal (2) à tester,
- au moins une information par rapport à l'au moins un test à exécuter est transmise au dispositif d'ordinateur (3) prévu dans le réseau radio mobile (1),
- au moins un programme de test est généré par le dispositif d'ordinateur (3) prévu dans le réseau radio mobile (1) sur la base de l'au moins une information transmise par rapport à l'au moins un test à exécuter, dans lequel l'information est une documentation, qui est structurée de manière standardisée et qui sert de manuel pour le terminal à tester, de sorte qu'une spécification de test peut être établie d'une manière automatisée sur la base de la structure de la documentation, par moyen de laquelle spécification de test au moins une caractéristique à tester peut être définie d'une manière formalisée,
- le programme de test est transmis au terminal (2) à tester,
- le programme de test reçu par le terminal (2) à tester est exécuté, et
- dans le cadre de l'exécution du programme de test des données de test par rapport au test à exécuter sont saisies de manière au moins partiellement automatisée, dans lequel
les données de test saisies comprennent au moins des entrées faites sur le terminal (2) à tester et/ou des sorties générées par le terminal (2) à tester et/ou un identifiant, qui identifie le terminal (2) à tester et/ou une date par rapport au terminal (2) à tester et/ou des entrées ajoutées manuellement dans le cadre du test.

2. Procédé selon la revendication 1, **caractérisé en ce que** le programme de test est généré sur la base de l'au moins une spécification de test **en ce qu'**un programme de base correspondant est paramétré par moyen des données de test à attendre et extraites de la spécification de test.

3. Procédé selon la revendication 1 ou la revendication 2, **caractérisé en ce que** l'identifiant, qui identifie le terminal (2) à tester, est transmis ensemble avec l'au moins une information par rapport à l'au moins un test à exécuter au dispositif d'ordinateur (3) prévu dans le réseau radio mobile (1).

4. Procédé selon l'une des revendications 1 à 3, **caractérisé en ce que** la transmission (7) du programme de test généré au terminal (2) à tester est effectuée par moyen d'au moins un service du réseau radio mobile (1).

5. Procédé selon l'une des revendications 1 à 4, **caractérisé en ce que** l'identifiant, qui identifie le terminal (2) à tester, est un MSISDN (MSISDN : Mobile Subscriber Integrated Services Digital Network Number) attribué au terminal (2) ou l'IMSI (IMSI: International Mobile Subscriber Identity) attribuée au module d'identification d'abonné mobile.

6. Procédé selon l'une des revendications 1 à 5, **caractérisé en ce que** le programme de test est un applet.

7. Procédé selon l'une des revendications 1 à 6, **caractérisé en ce que** le programme de test est exécuté par moyen du module d'identification d'abonné mobile (SIM, SIM: Subscriber Identity Module) du terminal (2) à tester.

8. Procédé selon l'une des revendications 1 à 7, **caractérisé en ce que** le programme de test est crypté et/ou certifié avant la transmission (7).

9. Procédé selon l'une des revendications 1 à 8, **caractérisé en ce que** les données de test saisies dans le cadre de l'exécution du programme de test sont au moins partiellement transmises au dispositif d'ordinateur (3) prévu dans le réseau radio mobile (1).

10. Procédé selon l'une des revendications 1 à 9, **caractérisé en ce qu'**un rapport de test est généré par moyen du dispositif d'ordinateur (3) prévu dans le réseau radio mobile (1) sur la base des données de test reçues.

11. Procédé selon la revendication 9 ou la revendication 10, **caractérisé en ce que** les données de test reçues sont jointes au rapport de test par moyen du dispositif d'ordinateur (3) prévu dans le réseau radio mobile (1).

12. Procédé selon la revendication 10 ou la revendication 11, **caractérisé en ce que** les données de test reçues sont comparées avec des données de test à attendre par moyen du dispositif d'ordinateur (3) prévu dans le réseau radio mobile (1).

13. Procédé selon la revendication 12, **caractérisé en ce que** les données de test à attendre se fondent sur au moins une information par rapport à au moins un test à exécuter selon un procédé selon l'une des revendications 1 à 10.

14. Dispositif d'ordinateur (3) fonctionnant dans un réseau radio mobile (1) selon un standard de réseau radio GSM, GPRS, UMTS et/ou LTE, dans lequel le dispositif d'ordinateur (3) est adapté à
- recevoir un identifiant, qui identifie le terminal (2) à tester pour déterminer un terminal (2) à tester,
- recevoir au moins une information par rapport à au moins un test à exécuter,
- générer au moins un programme de test sur la base de l'au moins une information transmise par rapport à l'au moins un test à exécuter, dans lequel l'information est une documentation, qui est structurée de manière standardisée et qui sert de manuel pour le terminal à tester, de sorte qu'une spécification de test peut être établie d'une manière automatisée sur la base de la structure de la documentation, par moyen de laquelle spécification de test au moins une caractéristique à tester peut être définie d'une manière formalisée, et
- transmettre le programme de test généré au terminal (2) à tester,
dans lequel
le dispositif d'ordinateur (3) est configuré pour et/ou adapté à exécuter les étapes de procédé d'un procédé selon l'une de revendications 1 à 13, lesquelles étapes de procédé sont à exécuter par le dispositif d'ordinateur (3).
